# EUROPEAN PATENT APPLICATION

(11) **EP 3 112 690 A1**
(43) Date of publication of application: **04.01.2017**
(21) Application number: 16176818.9
(22) Date of filing: 29.06.2016
(51) Int. Cl.: F04D 27/02, F01D 17/10, F02C 6/08, F02C 9/18, F16K 17/04, F15B 20/00, F16K 17/30

(54) **PNEUMATICALLY ACTUATED HPC BLEED VALVE, WHICH IS CONTROLLED BY A SOLENOID VALVE, WHICH IN TURN IS ASSISTED IN ITS CLOSING POSITION BY A FLOW LIMITING VALVE**

(30) Priority: 29.06.2015 US 201514753625
(71) Applicant: Hamilton Sundstrand Corporation, Charlotte, NC 28217-4578 (US)
(72) Inventor: MAROCCHINI, Francis P., Somers, CT Connecticut 06071 (US); GOODMAN, Robert, West Hartford, CT Connecticut 06117 (US); RICKIS, Aaron F., Feeding Hills, MA Massachusetts 01030 (US); McBRIEN, Gary M., S. Glastonbury, CT Connecticut 06073 (US)
(74) Representative: Bridge, Kerry Ann

(57) **Abstract**

A bleed valve system includes a flow path (102) defined between a system inlet (104) and a system outlet (106). A pressure control mechanism (108) is defmed in the flow path downstream from the system inlet to selectively block fluid flow in the flow path. A pressure limiter (110) is defined in the flow path downstream from the system inlet (104) and upstream from the pressure control mechanism (108) to block the flow path when the pressure at the system inlet is greater than the pressure capacity of the pressure control mechanism (108).

## Description

### BACKGROUND OF THE INVENTION

### 1. Field of the Invention

The present disclosure relates to valves, and more particularly to pressure control mechanisms for valves used in bleed systems such as those used in gas turbine engines.

### 2. Description of Related Art

A variety of devices require a substantially constant supply of pressurized fluid in order to function properly. For example, secondary aircraft systems such as environmental control or anti-ice systems often require an input supply of constant pressure gas. Sources of pressurized gas, for example, are present in the compressor of gas turbine engine. If the pressure in one of the sources, e.g. an intermediate-pressure (IP) bleed valve, is too low for the secondary aircraft system, high-pressure bleed fluid from a high-pressure (HP) bleed valve is utilized. To transition from the IP bleed fluid to the HP bleed fluid, a pressure control mechanism, e.g. an electromechanical interface such as a solenoid, is actuated to cause the HP bleed valve to open and the IP valve to close. Typically, the required HP fluid pressure for use in the secondary aircraft systems is lower than the maximum HP fluid pressure. However, pressure control mechanisms are generally designed to ensure the valve is closed whenever the HP fluid pressure is above the minimum required pressure, meaning that the solenoid is sized for maximum HP fluid pressure conditions, and in turn maximum temperature conditions.

Typically, this results in weight and packaging penalties due to the larger coils and spring forces required, even though the device may not be required to operate at higher pressures. Such conventional methods and systems have generally been considered satisfactory for their intended purpose. However, there is still a need in the art for an improved pressure control mechanisms. The present disclosure provides a solution for this need.

### SUMMARY OF THE INVENTION

A bleed valve system includes a flow path defined between a system inlet and a system outlet. A pressure control mechanism is defined in the flow path downstream from the system inlet to selectively block fluid flow in the flow path. A pressure limiter is defined in the flow path downstream from the system inlet and upstream from the pressure control mechanism to block the flow path when the pressure at the system inlet is greater than the pressure capacity of the pressure control mechanism.

The pressure control mechanism and the pressure limiter can each include respective biasing members. The biasing member of the pressure control mechanism can have a biasing force less than the biasing force of the biasing member of the pressure limiter. The respective biasing members of the pressure control mechanism and the pressure limiter can be springs. The pressure control mechanism can be a solenoid. The system can include a bleed valve in fluid communication with the system outlet downstream from the pressure control mechanism.

The pressure control mechanism can include a control pressure outlet in selective fluid communication with the flow path and a ball valve defined between the control pressure outlet and the flow path. In a closed position the ball valve can seal the flow path to block fluid flow from the system inlet to the system outlet while allowing fluid flow from the control pressure outlet to the system outlet. In an open position, the ball valve can allow fluid flow from the system inlet to the system outlet while blocking fluid flow from the control pressure outlet to the system outlet.

The pressure limiter can include a valve body defining an inlet chamber in fluid communication with the system inlet, an outlet chamber downstream from the inlet chamber, and a bleed orifice defined in the outlet chamber to hinder fluid buildup in the flow path downstream from the outlet chamber. A poppet is defined in the flow path between the inlet chamber and the outlet chamber. The poppet can seal against the valve body in a closed position to block fluid flow in the flow path between the inlet chamber and the outlet chamber. In an open position, the poppet can be separated from the valve body to allow fluid flow from the inlet chamber to the outlet chamber.

The valve body can include a spring chamber opposite of the inlet chamber. The spring chamber can include a spring having a seat. The seat can be operatively connected to a guide of the poppet. The seat of the spring can inhibit leakage from the flow path to the spring chamber when the poppet is in an open position. The valve body can be a first valve body and the outlet chamber can be in fluid communication with an inlet of a second valve body of the pressure limiter, e.g. a back-up valve body. The second valve body of the pressure limiter can be configured to close at a higher pressure than that of the first valve body. A spring of the second valve body can have a higher spring force than a spring of the first valve body.

A pressure limiter includes a valve body defining an inlet chamber, an outlet chamber in selective fluid communication with a flow path defined from the inlet chamber to the outlet chamber, and a bleed orifice defined in the outlet chamber to hinder fluid buildup in the outlet chamber. A poppet is defined in the flow path between the inlet chamber and the outlet chamber. The poppet seals against the valve body in a closed position to block fluid flow in the flow path between the inlet chamber and the outlet chamber to prevent fluid flow from reaching a downstream pressure control mechanism when the pressure of the fluid entering the inlet chamber exceeds a maximum threshold. When the pressure of the fluid entering the inlet chamber is below the maximum threshold the poppet is separated from the valve body in an open position to allow fluid flow from the inlet chamber to the outlet chamber.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a cross-sectional side elevation view of an exemplary embodiment of a bleed valve system constructed in accordance with the present disclosure, showing the pressure limiter, the pressure control mechanism, and the bleed valve in a closed position;
Fig. 2 is a cross-sectional side elevation view of the bleed valve system of Fig. 1, showing the bleed valve in an open position; and
Fig. 3 is a partial cross-sectional side elevation view of the pressure limiter of Fig. 1, showing the two valves of the pressure limiter.

### DETAILED DESCRIPTION OF THE PREFERRED EMBODIMENTS

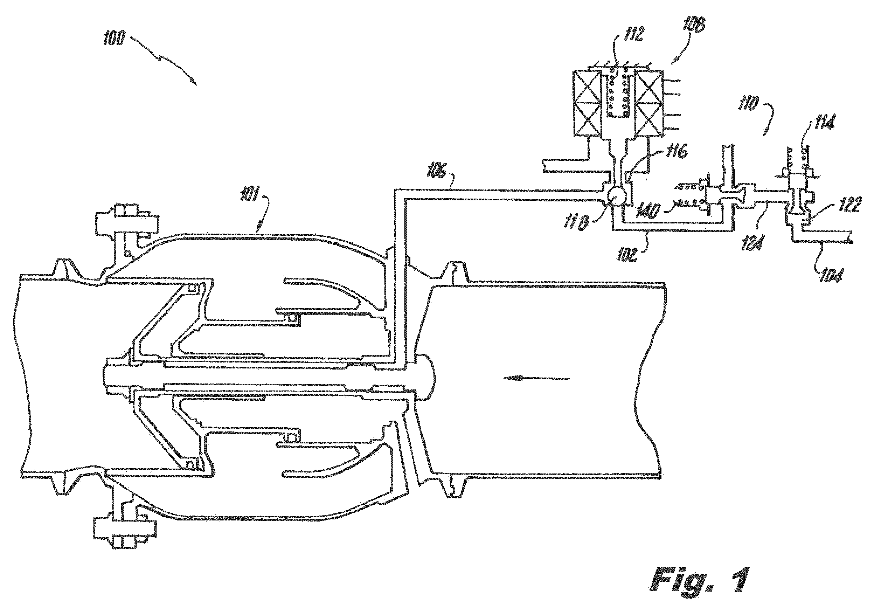

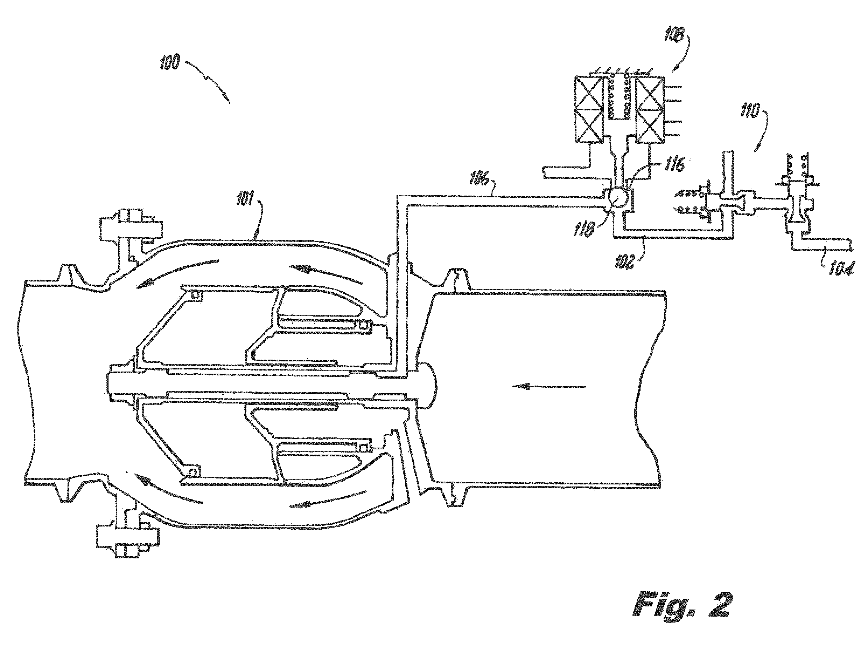

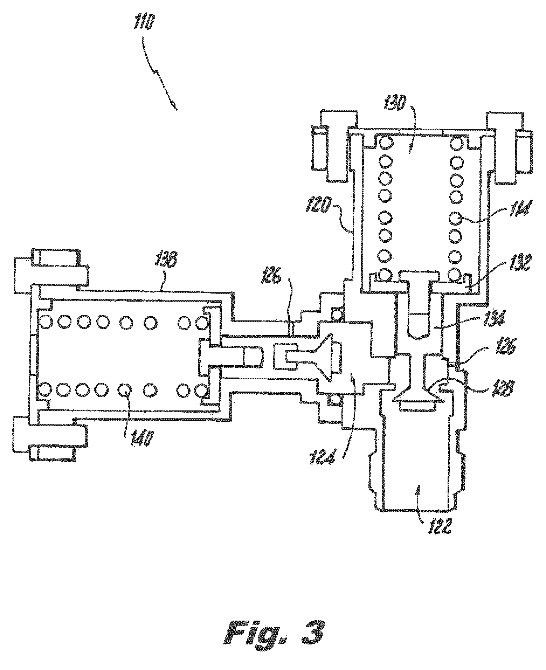

Reference will now be made to the drawings wherein like reference numerals identify similar structural features or aspects of the subject disclosure. For purposes of explanation and illustration, and not limitation, a partial view of an exemplary embodiment of a bleed valve system constructed in accordance with the disclosure is shown in Fig. 1 and is designated generally by reference character 100. Other embodiments of bleed valve systems in accordance with this disclosure, or aspects thereof, are provided in Figs. 2 and 3, as will be described. Bleed valve system 100 is smaller and lighter than traditional systems, resulting in reduced heat and energy consumption.

As shown in Fig. 1, a bleed valve system 100 includes a flow path 102 defined between a system inlet 104 and a system outlet 106. A pressure control mechanism 108 is defined in flow path 102 downstream from system inlet 104 to selectively block fluid flow in flow path 102. A pressure limiter 110 is defined in flow path 102 downstream from system inlet 104 and upstream from pressure control mechanism 108 to block flow path 102 when the pressure at system inlet 104 is greater than the pressure capacity of pressure control mechanism 108. Those skilled in the art will readily appreciate that system inlet 104 can be in fluid communication with a high-pressure (HP) pressure source, e.g. the high-pressure compressor of a gas turbine engine. By including pressure limiter 110, the pressure control mechanism is not required to be sized for the maximum conditions, e.g. maximum HP pressure. System 100 includes a bleed valve 101 in fluid communication with system outlet 106 and downstream from pressure control mechanism 108. Pressure limiter 110 provides protection against a pressure control mechanism 108 failing in the open position, either seized in the open position or inadvertently commanded open when the HP pressure exceeds the specified level. In that situation, bleed valve 101 would still be open above the normal HP pressure, but pressure limiter 110 would shut off the supply from inlet 104 and bleed valve 101 would close.

With continued reference to Fig. 1, pressure control mechanism 108 and pressure limiter 110 each include biasing members 112 and 114, respectively. Biasing member 112 of pressure control mechanism 108 has a biasing force less than the biasing force of biasing member 114 of pressure limiter 110. The respective biasing members of pressure control mechanism 108 and pressure limiter 110 are coil springs. However, it is also contemplated that there are a variety of suitable biasing members 114, for example, bellows with bowed convolutions, pressurized membranes, such as diaphragms, and the like. Those skilled in the art will readily appreciate that pressure control mechanism 108 can be a variety of electromechanical actuator devices, such as a solenoid, or the like. Pressure control mechanism 108 includes a control pressure outlet 116 in selective fluid communication with flow path 102 and a ball valve 118 defined between control pressure outlet 116 and flow path 102. In a closed position, as shown in Fig. 1, ball valve 118 seals flow path 102 to block fluid flow from system inlet 104 to system outlet 106 while allowing fluid flow from control pressure outlet 116 to system outlet 106.

As shown in Fig. 2, in an open position, ball valve 118 allows fluid flow from system inlet 104 to the system outlet 106 while blocking fluid flow from control pressure outlet 116 to system outlet 106.

With reference now to Fig. 3, pressure limiter 110 includes a valve body 120 defining an inlet chamber 122 in fluid communication with system inlet 104, an outlet chamber 124 downstream from the inlet chamber 122, and a bleed orifice 126 defined in outlet chamber 124 to hinder fluid buildup in flow path 102 downstream from outlet chamber 124, for example between outlet chamber 124 and ball valve 118. A poppet 128 is defined in flow path 102 between inlet chamber 122 and outlet chamber 124. When the poppet 128 is in a closed position and ball valve 118 is also closed, orifice 126 ensures that there is no pressure buildup in the line due to poppet leakage. If the ball valve 118 was stuck open with poppet 128 in the closed position, bleed orifice 126 would prevent pressure buildup from HP valve ring leakage as well. Those skilled in the art will readily appreciate that due to the minimal package envelope required of limiter 110 it can be integrated with the pressure control mechanism 108, or it can be a separate line-replaceable unit.

Valve body 120 includes a spring chamber 130 opposite of inlet chamber 122. Spring chamber 130 includes biasing member 114, for example, a spring, having a seat 132. Seat 132 is operatively connected to a guide 134 of poppet 128. The maximum open stroke of poppet 128 is set by spring seat 132 bottoming against valve body 120. Seat 132 of spring 114 inhibits leakage from flow path 102 to spring chamber 130 when poppet 128 is in an open position. Preload of spring 114 defines the point at which poppet 128 begins to close. Those skilled in the art will readily appreciate that in order to minimize the band between open and closed positions, the spring rate is minimized.

With continued reference to Fig. 3, inlet chamber 122 is at HP pressure and spring chamber 130 is at ambient pressure. When HP gage pressure exceeds spring 114 preload, poppet 128 closes and shuts off HP pressure to pressure control mechanism 108. This allows pressure control mechanism 108 to be designed to only overcome the required HP pressure to satisfy the downstream system demand, e.g. for secondary aircraft systems. Those skilled in the art will readily appreciate that the effective flow area through flow path 102 around poppet 128 (based on poppet diameter and stroke) is sized so as not to materially affect the flow area through the pressure control mechanism 108, which in turn controls the opening time of the bleed valve 101, e.g. a HP bleed valve.

In an open position, as shown in Fig. 3, poppet 128 is separated from valve body 120 to allow fluid flow from the inlet chamber to outlet chamber 124. In a closed position, poppet 128 seals against valve body 120 to block fluid flow in flow path 102 between inlet chamber 122 and outlet chamber 124.

With continued reference to Fig. 3, valve body 120 is a first valve body and outlet chamber 124 is in fluid communication with an inlet 136 of a second valve body 138 of pressure limiter 110. Second valve body 138 is a back-up limiter and is intended to block fluid flow in flow path 102 should first valve body 120 fail in the open position. As such, second valve body 138 of pressure limiter 110 is configured to close at a higher pressure than that of first valve body 120. A biasing member 140, e.g. a spring, of second valve body 138 has a higher spring force than spring 114 of first valve body 120. Flow through the valve body 120 is routed from outlet chamber 124 to inlet 136 of second valve body 138, e.g. backup valve body. Valve body 138 behaves the same way as described above with respect to valve body 120 when the spring preload of spring 114 is exceeded. Those skilled in the art will readily appreciate that a backup valve body 138 may not be required if the failure rates and modes of the primary, e.g. valve body 120, meet system reliability requirements. Alternately, or if desired and/or necessary, depending upon reliability requirements, three valve bodies can be used in series. It is also contemplated that a pressure sensor could be used between the two valve bodies 120 and 138 and/or also at the inlet of pressure control mechanism 108 for fault detection. The pressure sensors may not be needed if the failure rates of the valve bodies and consequence of failure is acceptable without monitoring.

The methods and systems of the present disclosure, as described above and shown in the drawings, provide light weight, compact and controllable bleed valve systems that can operate at high temperatures and pressures with reduced energy consumption and heat generation. While the apparatus and methods of the subject disclosure have been shown and described with reference to preferred embodiments, those skilled in the art will readily appreciate that changes and/or modifications may be made thereto without departing from the spirit and scope of the subject disclosure.

## Claims

1. A bleed valve system (100) comprising:
a flow path (102) defined between a system inlet (104) and a system outlet (106);
a pressure control mechanism (108) defined in the flow path downstream from the system inlet (104) to selectively block fluid flow in the flow path; and
a pressure limiter (110) defined in the flow path downstream from the system inlet (104) and upstream from the pressure control mechanism (108) to block the flow path when the pressure at the system inlet (104) is greater than the pressure capacity of the pressure control mechanism (108).

2. The bleed valve system as recited in claim 1, wherein the pressure control mechanism (108) and the pressure limiter each include respective biasing members (112, 114), wherein the biasing member (112) of the pressure control mechanism (108) has a biasing force less than the biasing force of the biasing member (114) of the pressure limiter (110).

3. The bleed valve system as recited in claim 2, wherein the respective biasing members of the pressure control mechanism (108) and the pressure limiter (110) are springs.

4. The bleed valve system as recited in claim 1, wherein the pressure control mechanism (108) includes a control pressure outlet (116) in selective fluid communication with the flow path (102) and a ball valve (118) defined between the control pressure outlet (116) and the flow path (102), wherein in a closed position the ball valve (118) seals the flow path (102) to block fluid flow from the system inlet to the system outlet (106) while allowing fluid flow from the control pressure outlet to the system outlet (106), and wherein in an open position the ball valve (118) allows fluid flow from the system inlet to the system outlet while blocking fluid flow from the control pressure outlet to the system outlet.

5. The bleed valve system as recited in claim 1, further comprising a bleed valve in fluid communication with the system outlet downstream from the pressure control mechanism (108).

6. The bleed valve system as recited in claim 1, wherein the pressure limiter (110) includes:
a valve body (120) defining:
an inlet chamber (122) in fluid communication with the system inlet;
an outlet chamber (124) downstream from the inlet chamber; and
a bleed orifice (126) defined in the outlet chamber to hinder fluid buildup in the flow path (102) downstream from the outlet chamber (124); and
a poppet (128) defined in the flow path between the inlet chamber and the outlet chamber (124), wherein the poppet (128) seals against the valve body (120) in a closed position to block fluid flow in the flow path between the inlet chamber and the outlet chamber (124), and wherein in an open position the poppet (128) is separated from the valve body to allow fluid flow from the inlet chamber to the outlet chamber (124).

7. The bleed valve system as recited in claim 6, wherein the valve body (120) includes a spring chamber (130) opposite of the inlet chamber (122), wherein the spring chamber includes spring having a seat (132), wherein the seat is operatively connected to a guide of the poppet (128), wherein the seat (132) of the spring inhibits leakage from the flow path to the spring chamber (130) when poppet is in an open position.

8. The bleed valve system as recited in claim 6, wherein the valve body is a first valve body and the outlet chamber (124) is in fluid communication with an inlet of a second valve body of the pressure limiter.

9. The bleed valve system as recited in claim 8, wherein the second valve body of the pressure limiter (110) is configured to close at a higher pressure than that of the first valve body.

10. The bleed valve system as recited in claim 8, wherein a spring of the second valve body has a higher spring force than a spring of the first valve body.

11. The bleed valve system as recited in claim 1, wherein the pressure control mechanism (108) is a solenoid.

12. A pressure limiter (110) comprising:
a valve body (1250) defining:
an inlet chamber (122);
an outlet chamber (124) in selective fluid communication with a flow path (102) defined from the inlet chamber (122) to the outlet chamber (124); and
a bleed orifice (126) defined in the outlet chamber (124) to hinder fluid buildup in the outlet chamber (124); and
a poppet (128) defined in the flow path (102) between the inlet chamber (122) and the outlet chamber (124), wherein the poppet (128) seals against the valve body in a closed position to block fluid flow in the flow path between the inlet chamber (122) and the outlet chamber (124) to prevent fluid flow from reaching a downstream pressure control mechanism (108) when the pressure of the fluid entering the inlet chamber (122) exceeds a maximum threshold, and wherein when the pressure of the fluid entering the inlet chamber (122) is below the maximum threshold the poppet (128) is separated from the valve body in an open position to allow fluid flow from the inlet chamber (122) to the outlet chamber (124).

13. The pressure limiter as recited in claim 12, wherein the valve body includes a spring chamber (130) opposite of the inlet chamber (122), wherein the spring chamber (130) includes spring (114) having a seat (132), wherein the seat (132) is operatively connected to a guide of the poppet (128), wherein the seat (132) of the spring inhibits leakage from the flow path to the spring chamber when the poppet (128) is in an open position.

14. The pressure limiter as recited in claim 12, wherein the valve body is a first valve body and the outlet chamber (124) is in fluid communication with an inlet of a second valve body of the pressure limiter.

15. The pressure limiter as recited in claim 14, wherein the second valve body of the pressure limiter is configured to close at a higher pressure than that of the first valve body, and/or wherein a spring of the second valve body has a higher spring force than a spring of the first valve body.
